(19) Europäisches Patentamt European Patent Office Office européen des brevets

(11) **EP 4 418 701 A1**

(12) **EUROPEAN PATENT APPLICATION**

(43) Date of publication:
**21.08.2024 Bulletin 2024/34**

(21) Application number: **24157008.4**

(22) Date of filing: **12.02.2024**

(51) International Patent Classification (IPC):
**H04W 4/40** *(2018.01)*

(52) Cooperative Patent Classification (CPC):
**H04W 4/40; G08G 1/16**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.02.2023 JP 2023022668**

(71) Applicant: **CANON KABUSHIKI KAISHA Tokyo 146-8501 (JP)**

(72) Inventor: **MATSUMARU, Makoto Tokyo, 146-8501 (JP)**

(74) Representative: **TBK Bavariaring 4-6 80336 München (DE)**

(54) **COMMUNICATION DEVICE, STORAGE MEDIUM, AND COMMUNICATION METHOD**

(57) A communication device includes: a movement-relevant data acquiring unit configured to acquire movement-relevant data indicating information relevant to movement of a movable apparatus; a transmission interval determining unit configured to determine a time interval in which movable apparatus situation data indicating a situation of the movable apparatus is transmitted based on the movement-relevant data; and a movable apparatus situation data transmitting unit configured to transmit the movable apparatus situation data at the time interval determined by the transmission interval determining unit.

FIG. 4

EP 4 418 701 A1

**Description**

BACKGROUND OF THE INVENTION

Field of the Invention

The present invention relates to a communication device, a storage medium, and a communication method.

Description of the Related Art

V2X communication is communication that is performed between a vehicle having a communication device mounted therein and another vehicle, infrastructure, or the like. Communication performed between vehicles is called V2V (Vehicle to Vehicle) communication. Communication performed between a vehicle and infrastructure is called V2I (Vehicle to Infrastructure).

An example of infrastructure is road side equipment such as a traffic signal or a tollgate. Such communication realizes smooth transportation by transmitting and receiving necessary information between a vehicle and another vehicle, infrastructure, or the like.

Terms and necessary requirements for V2X communication are defined by the European Telecommunications Standards Institute (ETSI), the Society of Automotive Engineers (SAE), the Institute of Electrical and Electronics Engineers (IEEE), and other standardizing organizations.

For example, a behavior detecting unit, a relay range designating unit, a movable apparatus information generating unit, and a transmission unit are described in Japanese Unexamined Patent Application Publication No. 2006-221286.

The behavior detecting unit detects behavior information of a predetermined movable apparatus. The relay range designating unit designates a relay range of movable apparatus information. The movable apparatus information generating unit generates movable apparatus information including behavior information detected by the behavior detecting unit and relay range information indicating the relay range designated by the relay range designating unit. The transmission unit transmits the movable apparatus information generated by the movable apparatus information generating unit.

However, the communication device described in Japanese Unexamined Patent Application Publication No. 2006-221286 cannot curb a traffic volume of a network associated with V2X communication as a whole. This communication device does not have a function of transmitting movable apparatus information indicating situations of vehicles according to traveling situations of the vehicles.

Accordingly, for example, when a plurality of vehicles are present at an intersection and a two-wheel vehicle is traveling at the intersection at a cruising speed in a situation in which a traffic volume is increased, timings at which the vehicles receive movable apparatus information on the two-wheel vehicle may be delayed.

SUMMARY OF THE INVENTION

According to an aspect of the present invention, there is provided a communication device including at least one processor or circuit configured to function as: a movement-relevant data acquiring unit configured to acquire movement-relevant data indicating information relevant to movement of a movable apparatus; a transmission interval determining unit configured to determine a time interval in which movable apparatus situation data indicating a situation of the movable apparatus is transmitted based on the movement-relevant data; and a movable apparatus situation data transmitting unit configured to transmit the movable apparatus situation data at the time interval determined by the transmission interval determining unit.

Further features of the present invention will become apparent from the following description of embodiments with reference to the attached drawings.

BRIEF DESCRIPTION OF THE DRAWINGS

Fig. 1 is a diagram illustrating an example of ranges in which movable apparatus situation data is transmitted from movable apparatuses through V2X communication.
Fig. 2 is a diagram illustrating an example of ranges in which movable apparatus situation data is transmitted from movable apparatuses through V2X communication when congestion occurs in the vicinity of an intersection.
Figs. 3A and 3B are diagrams illustrating examples of time intervals at which movable apparatus situation data is transmitted.

Fig. 4 is a diagram illustrating an example of a configuration of a communication device according to a first embodiment.

Fig. 5 is a diagram illustrating an example of a relationship between a speed of a movable apparatus and a time interval at which movable apparatus situation data is transmitted according to the first embodiment.

Fig. 6 is a graph illustrating an example of a relationship between a speed of a movable apparatus and a time interval at which movable apparatus situation data is transmitted according to the first embodiment.

Fig. 7 is a flowchart illustrating an example of a process flow which is performed by the communication device according to the first embodiment.

Fig. 8 is a flowchart illustrating an example of a process flow which is performed by the communication device according to the first embodiment.

Fig. 9 is a diagram illustrating an example of a relationship between a speed of a movable apparatus and a time interval at which movable apparatus situation data is transmitted according to a second embodiment.

Fig. 10 is a graph illustrating an example of a relationship between a speed of a movable apparatus and a time interval at which movable apparatus situation data is transmitted according to the second embodiment.

Fig. 11 is a diagram illustrating an example of a reaction time and a friction coefficient which are used when a communication device according to a third embodiment calculates movable apparatus situation data with respect to a dry road surface.

Fig. 12 is a diagram illustrating an example of a time interval in which movable apparatus situation data is transmitted and which is calculated with respect to a dry road surface by the communication device according to the third embodiment.

Fig. 13 is a graph illustrating an example of a relationship between a time interval in which movable apparatus situation data is transmitted and which is calculated with respect to a dry road surface by the communication device according to the third embodiment and a speed of a movable apparatus.

Fig. 14 is a diagram illustrating an example of a reaction time and a friction coefficient which are used when a communication device according to the third embodiment calculates movable apparatus situation data with respect to a wet road surface.

Fig. 15 is a diagram illustrating an example of a time interval in which movable apparatus situation data is transmitted and which is calculated with respect to a wet road surface by the communication device according to the third embodiment.

Fig. 16 is a graph illustrating an example of a relationship between a time interval in which movable apparatus situation data is transmitted and which is calculated with respect to a wet road surface by the communication device according to the third embodiment and a speed of a movable apparatus.

Fig. 17 is a diagram illustrating an example of a reaction time and a friction coefficient which are used when a communication device according to the third embodiment calculates movable apparatus situation data with respect to a snowy road surface.

Fig. 18 is a diagram illustrating an example of a time interval in which movable apparatus situation data is transmitted and which is calculated with respect to a snowy road surface by the communication device according to the third embodiment.

Fig. 19 is a graph illustrating an example of a relationship between a time interval in which movable apparatus situation data is transmitted and which is calculated with respect to a snowy road surface by the communication device according to the third embodiment and a speed of a movable apparatus.

Fig. 20 is a diagram illustrating an example of a relationship between a congestion level indicated by movement-relevant data and a time interval at which movable apparatus situation data is transmitted according to a fourth embodiment.

DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

<First embodiment>

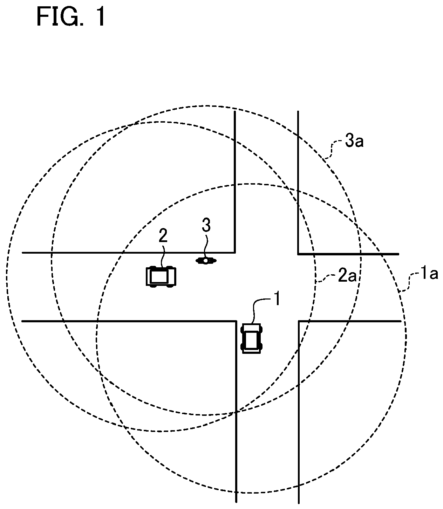

V2X communication will be described below with reference to Figs. 1 to 3. Fig. 1 is a diagram illustrating an example of ranges in which movable apparatus situation data is transmitted from movable apparatuses through V2X communication. Movable apparatus situation data is data indicating a situation of a movable apparatus.

A situation of a movable apparatus mentioned herein includes, for example, a position of the movable apparatus, a moving direction of the movable apparatus, and the fact that the movable apparatus perceives a predetermined object. For example, when movable apparatus situation data indicates at least one of a position of a movable apparatus and a moving direction of the movable apparatus, the movable apparatus situation data is a cooperative awareness message (CAM) or a vulnerable road user awareness message (VAM).

When movable apparatus situation data indicates the fact that a movable apparatus perceives a predetermined object, the movable apparatus situation data is a collective perception message (CPM).

In the standard of the European Technical Standards Institute Technical Committee Intelligent Transport System (ETSI TC ITS), an ITS architecture including four layers is defined.

An access layer defines a device connection method and a signal transmitting/receiving method in V2X communication. A networking & transport layer defines end-to-end communication and secures reliability for data transmission between nodes.

A facility layer provides functions necessary for applications for the cooperative ITS. An application layer defines applications for realizing smooth transportation using V2I communication and V2V communication.

Fig. 1 illustrates a movable apparatus 1, a movable apparatus 2, and a movable apparatus 3 which are traveling to an intersection of a crossroads. The movable apparatus 1 and the movable apparatus 2 are vehicles. The movable apparatus 3 is a two-wheel vehicle. The movable apparatus 1 is provided with, for example, a communication device 10 that is used to perform V2X communication with other vehicles such as the movable apparatus 2 and the movable apparatus 3 and infrastructure present near the movable apparatus 1.

Similarly, both the movable apparatus 2 and the movable apparatus 3 are also provided with a communication device 10 that is used to perform V2X communication. Details of the communication device 10 will be described later.

Fig. 1 illustrates a V2X communication range 1a, a V2X communication range 2a, and a V2X communication range 3a. The V2X communication range 1a is a circular range centered on the movable apparatus 1. The movable apparatus 1 performs V2X communication with a movable apparatus and infrastructure present within the V2X communication range 1a illustrated in Fig. 1.

Similarly, the V2X communication range 2a is a circular range centered on the movable apparatus 2. The movable apparatus 2 performs V2X communication with a movable apparatus and infrastructure present within the V2X communication range 2a illustrated in Fig. 1.

The V2X communication range 3a is a circular range centered on the movable apparatus 3. The movable apparatus 3 performs V2X communication with a movable apparatus and infrastructure present within the V2X communication range 3a illustrated in Fig. 1.

For example, since the movable apparatus 1 is located within the V2X communication range 2a of the movable apparatus 2 and the movable apparatus 2 is located within the V2X communication range 1a thereof, the movable apparatus 1 transmits movable apparatus situation data to the movable apparatus 2 through V2X communication in a period in which the movable apparatus 2 does not transmit movable apparatus situation data through V2X communication.

Similarly, since the movable apparatus 1 is located within the V2X communication range 3a of the movable apparatus 3 and the movable apparatus 3 is located within the V2X communication range 1a thereof, the movable apparatus 1 transmits movable apparatus situation data to the movable apparatus 2 and the movable apparatus 3 through V2X communication in a period in which the movable apparatus 2 and the movable apparatus 3 do not transmit movable apparatus situation data through V2X communication. These details are the same for the movable apparatus 2 and the movable apparatus 3.

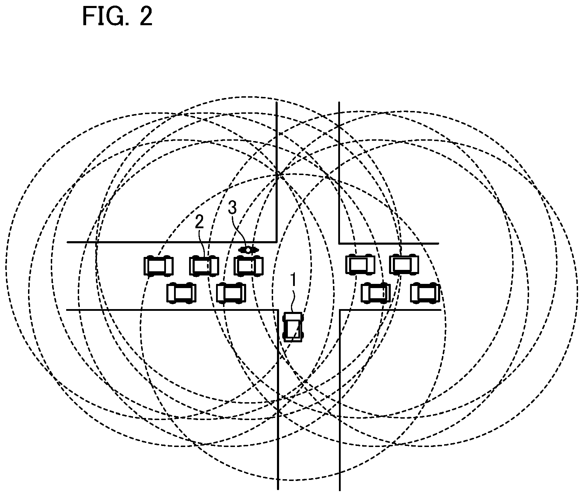

Fig. 2 is a diagram illustrating an example of ranges in which movable apparatus situation data is transmitted from movable apparatuses through V2X communication when congestion occurs in the vicinity of an intersection. Fig. 2 illustrates a movable apparatus 1, a movable apparatus 2, a movable apparatus 3, and other movable apparatuses which are stopped in the vicinity of an intersection of a crossroads and also illustrates V2X communication ranges of the movable apparatuses.

The V2X communication ranges illustrated in Fig. 2 are circular ranges centered on the corresponding movable apparatuses. For example, in the example illustrated in Fig. 2, the movable apparatus 1 transmits movable apparatus situation data through V2X communication in a period in which none of the movable apparatus 2, the movable apparatus 3, and the other movable apparatuses transmits movable apparatus situation data through V2X communication.

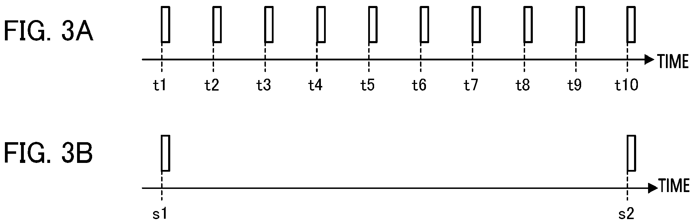

Figs. 3A and 3B are diagrams illustrating examples of time intervals at which movable apparatus situation data is transmitted. Fig. 3A illustrates an example in which the time interval at which movable apparatus situation data is transmitted is short. Fig. 3B illustrates an example in which the time interval at which movable apparatus situation data is transmitted is long.

In Figs. 3A and 3B, the horizontal axis represents time, and each rectangle represents a time in which movable apparatus situation data is transmitted. Time 11, time t2, ..., and time t10 in Fig. 3A are separated at an interval of 0.1 [sec]. On the other hand, time s1 and time s2 in Fig. 3B are separated at an interval of 1.0 [sec].

The time interval at which movable apparatus situation data is transmitted is adjusted according to a traffic volume of a network associated with V2X communication. Specifically, the time interval at which movable apparatus situation data is transmitted is adjusted to increase as the traffic volume of the network associated with V2X communication increases.

Accordingly, for example, when congestion illustrated in Fig. 2 occurs and a traffic volume of the network associated with V2X communication increases, the time interval at which movable apparatus situation data of the movable apparatus 3 which is a two-wheel vehicle is transmitted is also adjusted to increase. As a result, in this case, it may be difficult to realize smooth traffic.

The communication device 10 includes a central processing unit (CPU), a random access memory (RAM), a read only memory (ROM), a memory, and a bus. The CPU realizes functions of the communication device 10 by reading and executing a program.

The RAM is a recording medium to which a program read and executed by the CPU is temporarily loaded. The ROM is a recording medium in which the program read and executed by the CPU is stored. The memory is a recording medium in which driving data or the like is stored. The bus connects the CPU, the RAM, the ROM, and the memory such that they can communicate with each other.

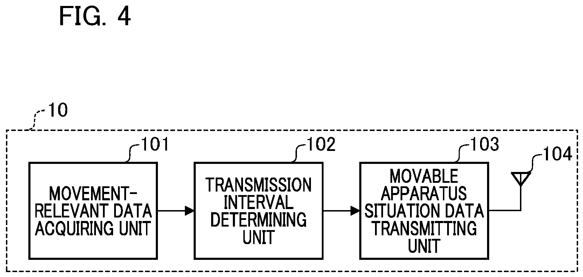

Functions of the communication device according to the first embodiment will be described below with reference to Figs. 4 to 8. Fig. 4 is a diagram illustrating an example of a configuration of the communication device according to the first embodiment.

As illustrated in Fig. 4, the communication device 10 includes a movement-relevant data acquiring unit 101, a transmission interval determining unit 102, a movable apparatus situation data transmitting unit 103, and an antenna 104. The movement-relevant data acquiring unit 101, the transmission interval determining unit 102, and the movable apparatus situation data transmitting unit 103 are realized by causing the CPU to read and execute a program.

The movement-relevant data acquiring unit 101 acquires movement-relevant data indicating information relevant to movement of the movable apparatus 1. For example, the movement-relevant data acquiring unit 101 acquires movement-relevant data indicating a moving speed of the movable apparatus 1.

The speed of the movable apparatus 1 is calculated, for example, based on a value of a speed which is the origin of a meter displaying the speed of the movable apparatus 1. Alternatively, the speed of the movable apparatus 1 is calculated based on a value calculated from a vehicle speed pulse of the movable apparatus 1. Alternatively, the speed of the movable apparatus 1 is calculated based on an amount of movement of the movable apparatus 1 calculated using a global positioning systems (GPS) mounted in the movable apparatus 1.

The transmission interval determining unit 102 determines a time interval at which movable apparatus situation data indicating a situation of the movable apparatus 1 is transmitted based on the movement-relevant data and generates transmission interval data indicating the time interval at which the movable apparatus situation data is transmitted.

For example, the transmission interval determining unit 102 determines the time interval at which the movable apparatus situation data is transmitted based on a reciprocal of the moving speed of the movable apparatus 1. Specifically, the transmission interval determining unit 102 determines the time interval at which the movable apparatus situation data is transmitted using Expression (1).

$$\text{Transmission interval of movable apparatus situation data [sec]} = 10 \text{ / speed of}$$

$$\text{movable apparatus [km/h]} \dots \text{Expression (1)}$$

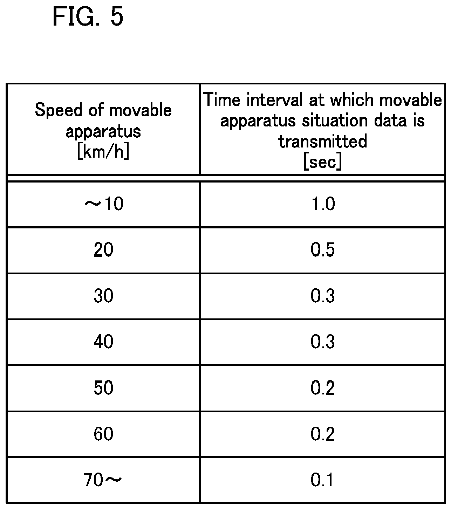

Fig. 5 is a diagram illustrating an example of a relationship between the speed of the movable apparatus and the transmission interval of movable apparatus situation data according to the first embodiment. The left column of Fig. 5 describes the speed [km/h] of the movable apparatus 1 in a range of from 10 [km/h] to 70 [km/h].

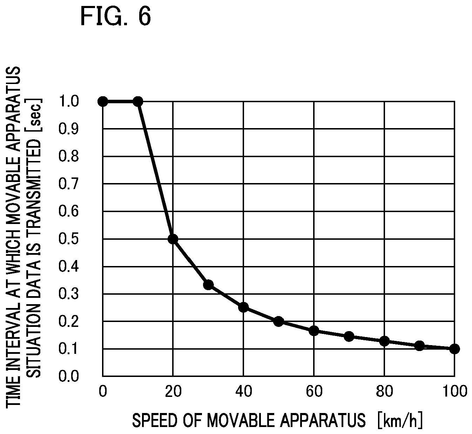

The right column of Fig. 5 describes a value obtained by rounding off the value calculated by Expression (1) to the second decimal point in a range of from 0.1 [sec] to 1.0 [sec]. Fig. 6 is a graph illustrating an example of a relationship between the speed of the movable apparatus and the transmission interval of movable apparatus situation data according to the first embodiment.

The horizontal axis of Fig. 6 represents the speed [km/h] of the movable apparatus 1. The vertical axis of Fig. 6 represents the transmission interval [sec] of movable apparatus situation data.

As illustrated in Figs. 5 and 6, the transmission interval of the movable apparatus situation data increases as the speed of the movable apparatus 1 decreases due to occurrence of congestion or the like and decreases as the speed of the movable apparatus 1 increases due to non-occurrence of congestion or the like.

The transmission interval determining unit 102 stores transmission interval data. For example, the transmission interval determining unit 102 stores the transmission interval data in a storage medium inside or outside of the communication device 10.

The movable apparatus situation data transmitting unit 103 transmits movable apparatus situation data at the time interval determined by the transmission interval determining unit 102. For example, the movable apparatus situation data transmitting unit 103 transmits movable apparatus situation data indicating at least one of a position of a movable apparatus and a moving direction of the movable apparatus.

It is preferable that the communication device 10 acquire movement-relevant data when information relevant to movement of the movable apparatus 1 changes and determine the time interval at which movable apparatus situation data is transmitted when the information relevant to movement of the movable apparatus 1 changes.

That is, it is preferable that the movement-relevant data acquiring unit 101 acquire movement-relevant data when information relevant to movement of the movable apparatus changes and the transmission interval determining unit 102 determine the time interval at which movable apparatus situation data is transmitted when the information relevant to movement of the movable apparatus changes.

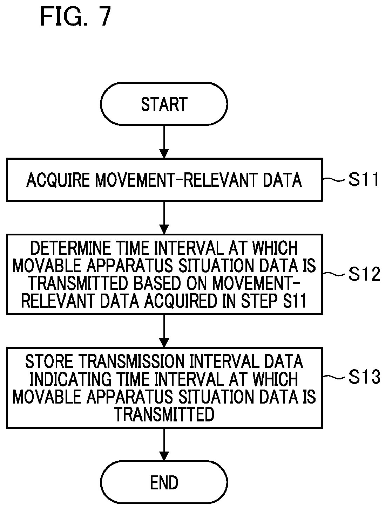

A process flow which is performed by the communication device 10 according to the first embodiment will be described below with reference to Fig. 7. Fig. 7 is a flowchart illustrating an example of a process flow which is performed by the communication device according to the first embodiment. Fig. 7 illustrates an example of a process flow until transmission interval data indicating the time interval at which movable apparatus situation data is transmitted is generated and stored.

In Step S 11, the movement-relevant data acquiring unit 101 acquires movement-relevant data.

In Step S12, the transmission interval determining unit 102 determines the time interval at which movable apparatus situation data is transmitted based on the movement-relevant data acquired in Step S 11.

In Step S13, the transmission interval determining unit 102 stores transmission interval data indicating the time interval at which movable apparatus situation data is transmitted.

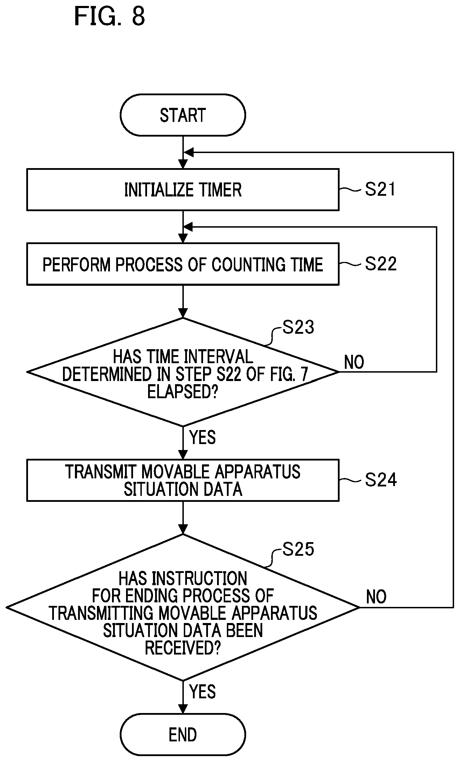

A process flow which is performed by the communication device 10 according to the first embodiment will be described below with reference to Fig. 8. Fig. 8 is a flowchart illustrating an example of a process flow which is performed by the communication device according to the first embodiment. Fig. 8 illustrates an example of a process flow of transmitting movable apparatus situation data.

In Step S21, the movable apparatus situation data transmitting unit 103 initializes a timer.

In Step S22, the movable apparatus situation data transmitting unit 103 performs a process of counting time.

In Step S23, the movable apparatus situation data transmitting unit 103 determines whether the time interval determined in Step S12 of Fig. 7 has elapsed. When it is determined that the time interval determined in Step S12 of Fig. 7 has elapsed (Step S23: YES), the movable apparatus situation data transmitting unit 103 causes the process flow to proceed to Step S24.

On the other hand, when it is determined that the time interval determined in Step S12 of Fig. 7 has not elapsed (Step S23: NO), the movable apparatus situation data transmitting unit 103 causes the process flow to return to Step S22.

In Step S24, the movable apparatus situation data transmitting unit 103 transmits the movable apparatus situation data.

In Step S25, the movable apparatus situation data transmitting unit 103 determines whether an instruction for ending the process of transmitting movable apparatus situation data has been received. When it is determined that an instruction for ending the process of transmitting movable apparatus situation data has been received (Step S25: YES), the movable apparatus situation data transmitting unit 103 ends the process flow.

On the other hand, when it is determined that an instruction for ending the process of transmitting movable apparatus situation data has not been received (Step S25: NO), the movable apparatus situation data transmitting unit 103 causes the process flow to return to Step S21.

The communication device 10 according to the first embodiment has been described hitherto. The communication device 10 acquires movement-relevant data indicating information relevant to movement of the movable apparatus 1. Then, the communication device 10 determines a time interval at which movable apparatus situation data indicating a situation of the movable apparatus 1 is transmitted based on the movement-relevant data.

Then, the communication device 10 transmits the movable apparatus situation data at the time interval determined by the transmission interval determining unit 102. Particularly, the communication device 10 acquires movement-relevant data indicating a moving speed of the movable apparatus 1 and determines the time interval at which the movable apparatus situation data is transmitted based on a reciprocal of the moving speed of the movable apparatus 1.

Through the aforementioned processes, the communication device 10 can decrease the time interval at which movable apparatus situation data of the movable apparatus 1 is transmitted as the speed of the movable apparatus 1 increases, and transmit the situation of the movable apparatus 1 in detail to a movable apparatus other than the movable apparatus 1, infrastructure, and the like.

Since the communication device 10 does not decrease the time interval at which movable apparatus situation data of the movable apparatus 1 is transmitted if unnecessary, it is possible to curb an unnecessary increase of a traffic volume of the network associated with V2X communication.

This is particularly effective when movable apparatus situation data of a movable apparatus such as a two-wheel vehicle which does not depend on congestion at the time of movement is transmitted to transmit the situation of the mobile object to other movable apparatuses, infrastructure, and the like.

Through the aforementioned processes, the communication device 10 can decrease a traffic volume of the whole area in which V2X communication is performed in a layer higher than the access layer when the speed of the movable apparatus 1 is low and the time interval at which movable apparatus situation data of the movable apparatus 1 is transmitted increases. The layer higher than the access layer mentioned herein is, for example, an application layer.

<Second embodiment>

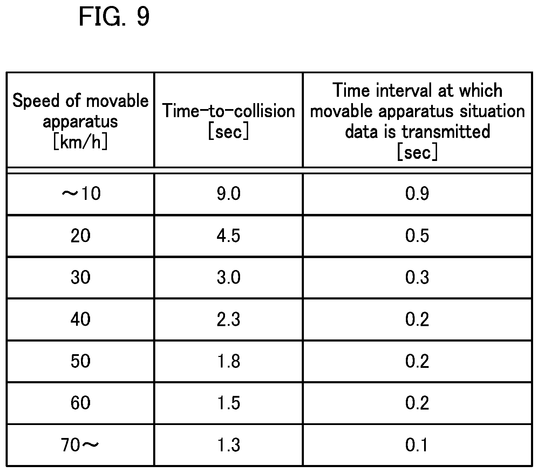

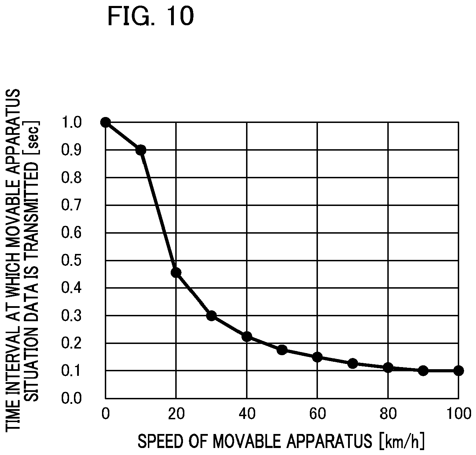

A communication device according to a second embodiment will be described below with reference to Figs. 9 and 10. In the second embodiment, the same details as in the first embodiment will be appropriately omitted by using the same reference signs as in the first embodiment, and differences from the first embodiment will be mainly described.

The movement-relevant data acquiring unit 101 acquires movement-relevant data indicating a moving speed of a movable apparatus 1.

The transmission interval determining unit 102 determines a time interval at which movable apparatus situation data is transmitted based on a time-to-collision (TTC) which is a time until the movable apparatus collides with an object such as another movable apparatus present in a moving direction of the movable apparatus.

Specifically, the transmission interval determining unit 102 determines the time interval at which movable apparatus situation data is transmitted using Expression (2) and Expression (3). 25 [m] which is a normal inter-vehicle distance between vehicles traveling at 40 [km/h] is employed as a distance D [m] included in Expression (3).

$$\text{Transmission interval of movable apparatus situation data [sec]} = \text{time-to-collision [sec]}/10... \text{Expression (2)}$$

$$\text{Time-to-collision [sec]} = \text{distance D [m]} / \text{speed of movable apparatus [m/sec]} = 25 \text{ [m]} / \text{speed of movable apparatus [m/sec]}... \text{Expression (3)}$$

Fig. 9 is a diagram illustrating an example of a relationship between a speed of a movable apparatus and a transmission interval of movable apparatus situation data according to the second embodiment. The left column of the table illustrated in Fig. 9 describes the speed [km/h] of the movable apparatus 1 in a range of from 10 [km/h] to 70 [km/h].

The central column of the table illustrated in Fig. 9 describes a value obtained by rounding off the TTC calculated by Expression (3) to the second decimal point. The right column of the table illustrated in Fig. 9 describes a value obtained by rounding off the value calculated by Expression (2) to the second decimal point.

Fig. 10 is a graph illustrating an example of a relationship between a speed of a movable apparatus and a transmission interval of movable apparatus situation data according to the second embodiment. The horizontal axis of Fig. 10 represents the speed [km/h] of the movable apparatus 1. The vertical axis of Fig. 10 represents the transmission interval [sec] of movable apparatus situation data.

As illustrated in Figs. 9 and 10, the transmission interval of the movable apparatus situation data increases as the speed of the movable apparatus 1 decreases due to occurrence of congestion or the like and decreases as the speed of the movable apparatus 1 increases due to non-occurrence of congestion or the like.

The communication device 10 according to the second embodiment has been described hitherto. The communication device 10 acquires movement-relevant data indicating the moving speed of the movable apparatus 1 and determines a time interval at which movable apparatus situation data is transmitted based on the time-to-collision which is a time until the movable apparatus 1 collides with an object present in the moving direction of the movable apparatus 1.

Accordingly, the communication device 10 can decrease the time interval at which movable apparatus situation data of the movable apparatus 1 is transmitted as the time-to-collision decreases, and transmit the situation of the movable apparatus 1 in detail to a movable apparatus other than the movable apparatus 1, infrastructure, and the like.

Since the communication device 10 does not decrease the time interval at which movable apparatus situation data of the movable apparatus 1 is transmitted if unnecessary, it is possible to curb an unnecessary increase of a traffic volume of the network associated with V2X communication.

In the second embodiment, it is assumed that 25 [m] which is a normal inter-vehicle distance between vehicles traveling at 40 [km/h] is employed as the distance D [m], but the present invention is not limited thereto.

For example, the communication device 10 may employ an inter-vehicle distance measured by a sensor mounted in the movable apparatus 1 as the distance D [m]. The sensor mentioned herein is, for example, a camera, a millimeter wave radar, or a Light Detection and Ranging (LiDAR) device.

The time-to-collision may be calculated by the communication device 10 or may be calculated by a device other than the communication device 10.

<Third embodiment>

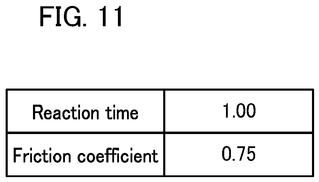

A communication device according to a third embodiment will be described below with reference to Figs. 11 to 19.

In the third embodiment, the same details as in the first embodiment and the second embodiment will be appropriately omitted by using the same reference signs as in at least one of the first embodiment and the second embodiment, and differences from the first embodiment and the second embodiment will be mainly described.

A process flow of calculating a stopping distance using a friction coefficient of a dry road surface and determining a time interval at which movable apparatus situation data is transmitted based on the stopping distance and the speed of the movable apparatus 1 which is performed by the communication device 10 will be described below with reference to Figs. 11 to 13.

The movement-relevant data acquiring unit 101 acquires movement-relevant data indicating a moving speed of a movable apparatus 1. The movement-relevant data acquiring unit 101 acquires movement-relevant data indicating at least one of an image generated by a camera or a LiDAR device mounted in the movable apparatus 1, an operation situation of a wiper mounted in the movable apparatus 1, and the weather near the movable apparatus 1.

The transmission interval determining unit 102 determines a time interval at which movable apparatus situation data is transmitted based on a moving speed of the movable apparatus 1 and the stopping distance calculated using the friction coefficient between tires of the movable apparatus 1 and a road surface on which the movable apparatus 1 is moving. Specifically, the transmission interval determining unit 102 determines the time interval at which movable apparatus situation data is transmitted using Expressions (4) to (7).

$$\text{Transmission interval of movable apparatus situation data [sec]} = 10/\text{stopping distance [m]} \ldots \text{Expression (4)}$$

$$\text{Stopping distance [m]} = \text{brake reaction distance [m]} + \text{braking distance [m]} + \text{safe distance [m]} = \text{brake reaction distance [m]} + \text{braking distance [m]} + 5 \text{ [m]} \ldots \text{Expression (5)}$$

$$\text{Brake reaction distance [m]} = \text{moving speed [m/sec]} \times \text{reaction time [sec]} = \text{moving speed [m/sec]} \times 1.0 \text{ [sec]} \ldots \text{Expression (6)}$$

$$\text{Braking distance [m]} = (\text{moving speed [m/sec]})^2 / (2 \times \text{friction coefficient} \times \text{gravitational acceleration}) = (\text{moving speed [m/sec]})^2 / (2 \times 0.75 \times 9.8) \ldots \text{Expression (7)}$$

The safe distance included in Expression (5) is assumed to be 5 [m]. Fig. 11 is a diagram illustrating an example of a reaction time and a friction coefficient which are used when the communication device according to the third embodiment calculates movable apparatus situation data in association with a dry road surface.

The reaction time of a driver of the movable apparatus 1 included in Expression (6) is assumed to be 1.0 [sec] illustrated in Fig. 11. The friction coefficient included in Expression (7) is an example of a dry road surface and is assumed to be 0.75 illustrated in Fig. 11.

The friction coefficient may be a friction coefficient in which a road surface state estimated using movement-relevant data indicating an image generated by a camera or a LiDAR device mounted in the movable apparatus 1, an operation situation of a wiper mounted in the movable apparatus 1, and the weather near the movable apparatus 1 is reflected. The gravitational acceleration included in Expression (7) is 9.8 [kg·m/s$^2$].

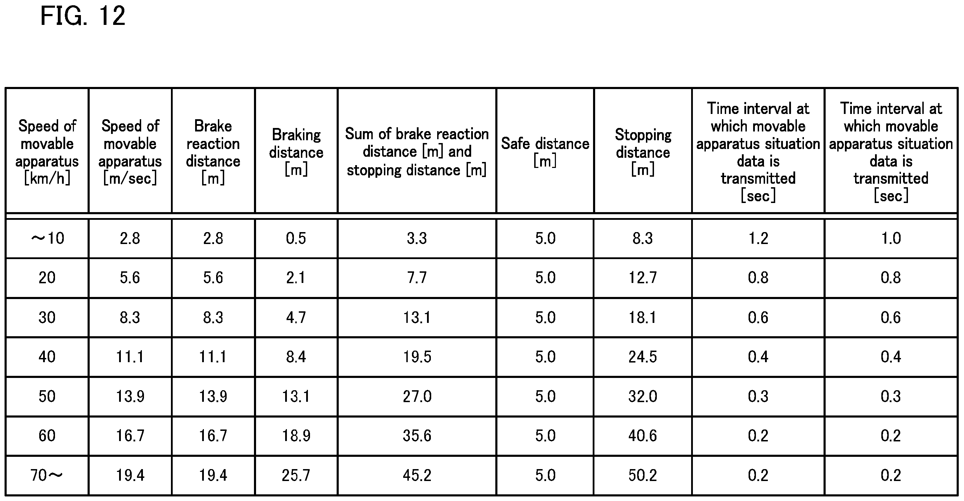

Fig. 12 is a diagram illustrating an example of a transmission interval of movable apparatus situation data calculated for a dry road surface by the communication device according to the third embodiment. The first column from the left in Fig. 12 indicates a speed [km/h] of the movable apparatus 1.

The second column from the left in Fig. 12 indicates a speed [m/sec] of the movable apparatus 1. The third column from the left in Fig. 12 indicates a brake reaction distance [m]. The fourth column from the left in Fig. 12 indicates a braking distance [m].

The fifth column from the left in Fig. 12 indicates a sum of the brake reaction distance [m] and the braking distance [m]. The sixth column from the left in Fig. 12 indicates a safe distance [m]. The seventh column from the left in Fig. 12 indicates a stopping distance [m].

The eighth column from the left in Fig. 12 indicates a transmission interval [sec] of movable apparatus situation data. The ninth column from the left in Fig. 12 indicates a value obtained by converting the transmission interval [sec] of movable apparatus situation data described in the eighth column from the left in Fig. 12 to be in a range of from a minimum value 0.1 [sec] to a maximum value 1.0 [sec].

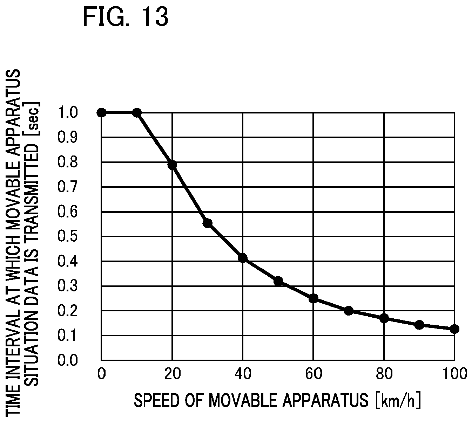

Fig. 13 is a graph illustrating an example of a relationship between a time interval at which movable apparatus situation data is transmitted and which is calculated for a dry road surface by the communication device according to the third embodiment and a speed of a movable apparatus.

The horizontal axis of Fig. 13 represents the speed [km/h] of the movable apparatus 1. The vertical axis of Fig. 13 represents the time interval [sec] in which movable apparatus situation data is transmitted. The time interval [sec] at which movable apparatus situation data is transmitted in Fig. 13 is a value obtained by converting the time interval [sec] to be in a range of from a minimum value 0.1 [sec] to a maximum value 1.0 [sec].

As illustrated in Figs. 12 and 13, in case of a dry road surface, the transmission interval of movable apparatus situation data increases as the speed of the movable apparatus 1 decreases due to occurrence of congestion or the like. The shorter the free running distance, braking distance, and stopping distance, the longer the interval at which movable apparatus situation data (status data) is transmitted.

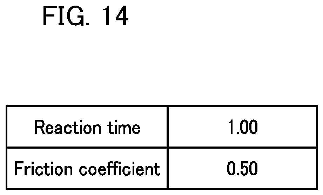

A process flow of calculating a stopping distance using a friction coefficient of a wet road surface and determining a time interval at which movable apparatus situation data is transmitted based on the stopping distance and a speed of a movable apparatus 1 which is performed by the communication device 10 will be described below with reference to Figs. 14 to 16.

The movement-relevant data acquiring unit 101 acquires movement-relevant data indicating a moving speed of a movable apparatus 1. The movement-relevant data acquiring unit 101 acquires movement-relevant data indicating at least one of an image generated by a camera or a LiDAR device mounted in the movable apparatus 1, an operation situation of a wiper mounted in the movable apparatus 1, and the weather near the movable apparatus 1.

The transmission interval determining unit 102 determines a time interval at which movable apparatus situation data is transmitted using the same expressions as Expressions (4) to (7) even in case of a wet road surface. Fig. 14 is a diagram illustrating an example of a reaction time and a friction coefficient which are used when the communication device according to the third embodiment calculates movable apparatus situation data for a wet road surface.

The reaction time of a driver of the movable apparatus 1 included in Expression (6) is assumed to be 1.0 [sec] illustrated in Fig. 11. The friction coefficient included in Expression (7) is assumed to be 0.50 illustrated in Fig. 14 in case of a wet road surface.

The friction coefficient may be a friction coefficient in which a road surface state estimated using movement-relevant data indicating an image generated by a camera or a LiDAR device mounted in the movable apparatus 1, an operation situation of a wiper mounted in the movable apparatus 1, and the weather near the movable apparatus 1 is reflected.

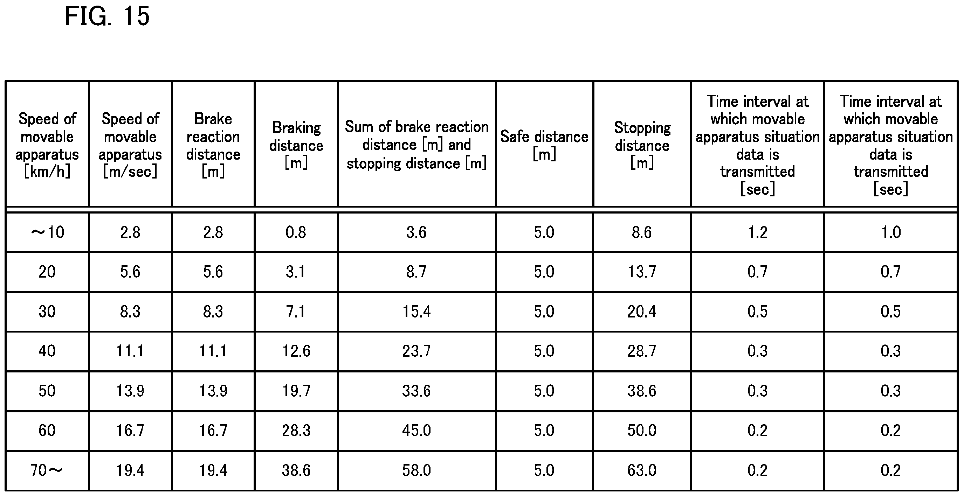

Fig. 15 is a diagram illustrating an example of a time interval at which movable apparatus situation data is transmitted and which is calculated for a wet road surface by the communication device according to the third embodiment. The first column from the left in Fig. 15 indicates a speed [km/h] of the movable apparatus 1.

The second column from the left in Fig. 15 indicates a speed [m/sec] of the movable apparatus 1. The third column from the left in Fig. 15 indicates a brake reaction distance [m]. The fourth column from the left in Fig. 15 indicates a braking distance [m].

The fifth column from the left in Fig. 15 indicates a sum of the brake reaction distance [m] and the braking distance [m]. The sixth column from the left in Fig. 15 indicates a safe distance [m]. The seventh column from the left in Fig. 15 indicates a stopping distance [m].

The eighth column from the left in Fig. 15 indicates a transmission interval [sec] of movable apparatus situation data. The ninth column from the left in Fig. 15 indicates a value obtained by converting the transmission interval [sec] of movable apparatus situation data described in the eighth column from the left in Fig. 15 to be in a range of from a minimum value 0.1 [sec] to a maximum value 1.0 [sec].

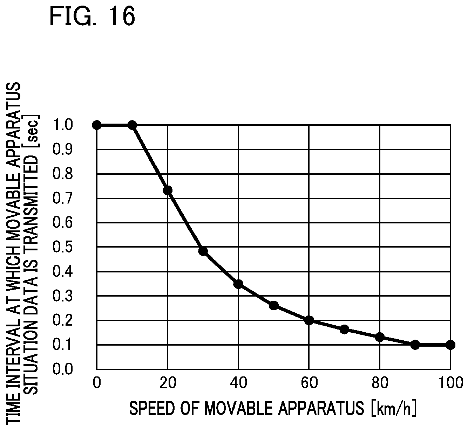

Fig. 16 is a graph illustrating an example of a relationship between a time interval at which movable apparatus situation data is transmitted and which is calculated for a wet road surface by the communication device according to the third embodiment and a speed of a movable apparatus.

The horizontal axis of Fig. 16 represents the speed [km/h] of the movable apparatus 1. The vertical axis of Fig. 16 represents the time interval [sec] in which movable apparatus situation data is transmitted. The time interval [sec] at which movable apparatus situation data is transmitted in Fig. 16 is a value obtained by converting the time interval [sec] to be in a range of from a minimum value 0.1 [sec] to a maximum value 1.0 [sec].

As illustrated in Figs. 15 and 16, in case of a wet road surface, the transmission interval of movable apparatus situation data increases as the speed of the movable apparatus 1 decreases due to occurrence of congestion or the like. The shorter the free running distance, braking distance, and stopping distance, the longer the interval at which movable apparatus situation data (status data) is transmitted.

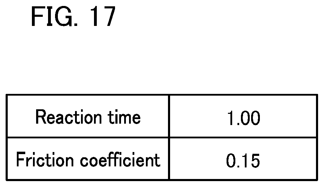

A process flow of calculating a stopping distance using a friction coefficient of a snowy road surface and determining a time interval at which movable apparatus situation data is transmitted based on the stopping distance and a speed of a movable apparatus 1 which is performed by the communication device 10 will be described below with reference to Figs. 17 to 19.

The movement-relevant data acquiring unit 101 acquires movement-relevant data indicating a moving speed of a movable apparatus 1. The movement-relevant data acquiring unit 101 acquires movement-relevant data indicating at least one of an image generated by a camera or a LiDAR device mounted in the movable apparatus 1, an operation situation of a wiper mounted in the movable apparatus 1, and the weather near the movable apparatus 1.

The transmission interval determining unit 102 determines a time interval at which movable apparatus situation data is transmitted using the same expressions as Expressions (4) to (7) even in case of a snowy road surface. Fig. 17 is a diagram illustrating an example of a reaction time and a friction coefficient which are used when the communication device according to the third embodiment calculates movable apparatus situation data for a snowy road surface.

The reaction time of a driver of the movable apparatus 1 included in Expression (6) is assumed to be 1.0 [sec] illustrated in Fig. 11. The friction coefficient included in Expression (7) is assumed to be 0.15 illustrated in Fig. 17 in case of a snowy road surface.

The friction coefficient may be a friction coefficient in which a road surface state estimated using movement-relevant data indicating an image generated by a camera or a LiDAR device mounted in the movable apparatus 1, an operation situation of a wiper mounted in the movable apparatus 1, and the weather near the movable apparatus 1 is reflected.

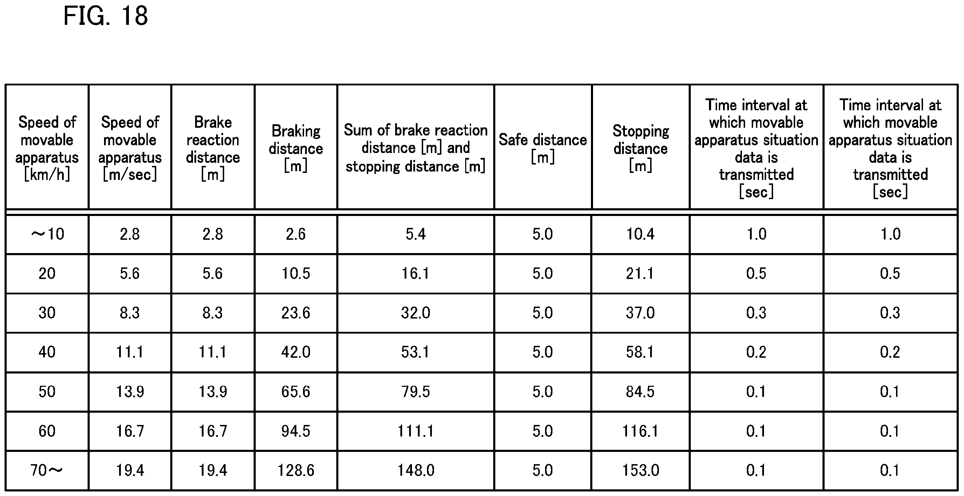

Fig. 18 is a diagram illustrating an example of a time interval at which movable apparatus situation data is transmitted and which is calculated for a snowy road surface by the communication device according to the third embodiment. The first column from the left in Fig. 18 indicates a speed [km/h] of the movable apparatus 1.

The second column from the left in Fig. 18 indicates a speed [m/sec] of the movable apparatus 1. The third column from the left in Fig. 18 indicates a brake reaction distance [m]. The fourth column from the left in Fig. 18 indicates a braking distance [m].

The fifth column from the left in Fig. 18 indicates a sum of the brake reaction distance [m] and the braking distance [m]. The sixth column from the left in Fig. 18 indicates a safe distance [m]. The seventh column from the left in Fig. 18 indicates a stopping distance [m].

The eighth column from the left in Fig. 18 indicates a transmission interval [sec] of movable apparatus situation data. The ninth column from the left in Fig. 18 indicates a value obtained by converting the transmission interval [sec] of movable apparatus situation data described in the eighth column from the left in Fig. 18 to be in a range of from a minimum value 0.1 [sec] to a maximum value 1.0 [sec].

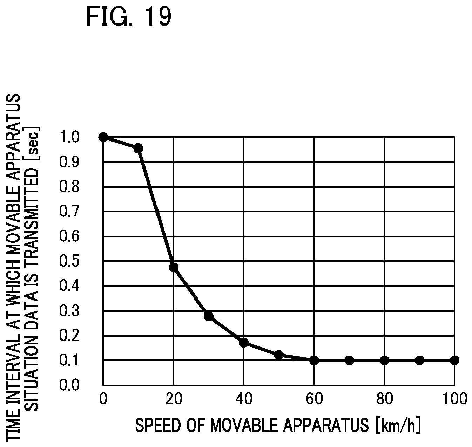

Fig. 19 is a graph illustrating an example of a relationship between a time interval at which movable apparatus situation data is transmitted and which is calculated for a snowy road surface by the communication device according to the third embodiment and a speed of a movable apparatus.

The horizontal axis of Fig. 19 represents the speed [km/h] of the movable apparatus 1. The vertical axis of Fig. 19 represents the time interval [sec] in which movable apparatus situation data is transmitted. The time interval [sec] at which movable apparatus situation data is transmitted in Fig. 19 is a value obtained by converting the time interval [sec] to be in a range of from a minimum value 0.1 [sec] to a maximum value 1.0 [sec].

As illustrated in Figs. 18 and 19, in case of a snowy road surface, the transmission interval of movable apparatus situation data increases as the speed of the movable apparatus 1 decreases due to occurrence of congestion or the like. The shorter the free running distance, braking distance, and stopping distance, the longer the interval at which movable apparatus situation data (status data) is transmitted.

The communication device 10 according to the third embodiment has been described hitherto. The communication device 10 determines a time interval at which movable apparatus situation data is transmitted based on the moving speed of the movable apparatus 1 and the stopping distance calculated using the friction coefficient between tires of the movable apparatus 1 and the road surface on which the movable apparatus 1 is moving.

Accordingly, the communication device 10 can decrease the time interval at which movable apparatus situation data of the movable apparatus 1 is transmitted and transmit the situation of the movable apparatus 1 in detail to a movable apparatus other than the movable apparatus 1, infrastructure, and the like as the friction coefficient decreases and it becomes more difficult to early decelerate or stop.

Since the communication device 10 does not decrease the time interval at which movable apparatus situation data of the movable apparatus 1 is transmitted if unnecessary, it is possible to curb an unnecessary increase of a traffic volume of the network associated with V2X communication.

The friction coefficient may be a friction coefficient in which a road surface state estimated using movement-relevant data indicating an image generated by a camera or a LiDAR device mounted in the movable apparatus 1, an operation situation of a wiper mounted in the movable apparatus 1, and the weather near the movable apparatus 1 is reflected.

Accordingly, the communication device 10 can more suitably determine the time interval at which movable apparatus situation data of the movable apparatus 1 is transmitted using the friction coefficient based on a situation of a road surface including rain, snow, or the like near the movable apparatus 1.

The communication device 10 according to the third embodiment may perform the aforementioned process flow using a friction coefficient in consideration of a type of a movable apparatus. The types of a movable apparatus mentioned herein include, for example, a four-wheel vehicle and a two-wheel vehicle.

<Fourth embodiment>

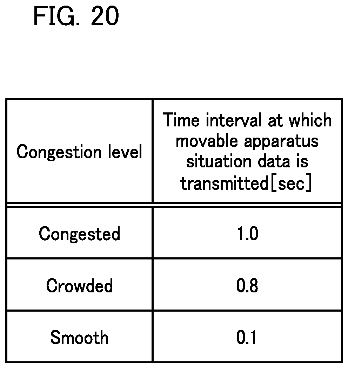

A communication device according to a fourth embodiment will be described below with reference to Fig. 20.

In the fourth embodiment, the same details as in the first embodiment, the second embodiment, and the third embodiment will be appropriately omitted by using the same reference signs as in at least one of the three embodiments, and differences from the three embodiments will be mainly described.

The movement-relevant data acquiring unit 101 acquires movement-relevant data indicating a moving speed of a movable apparatus 1. The movement-relevant data acquiring unit 101 acquires movement-relevant data indicating a congestion status near the movable apparatus 1.

The movement-relevant data acquiring unit 101 acquires the movement-relevant data from, for example, the vehicle information and communication system (VICS (registered trademark)) using a navigation device mounted in the movable apparatus 1.

Fig. 20 is a diagram illustrating an example of a relationship between a congestion level indicated by movement-relevant data and a time interval at which movable apparatus situation data is transmitted according to the fourth embodiment. The left column in Fig. 20 describes a congestion level. The right column in Fig. 20 describes a time interval at which movable apparatus situation data is transmitted.

The congestion level includes, for example, three levels of "congested," "crowded," and "smooth" as illustrated in Fig. 20. "Congested" is, for example, a state in which movable apparatuses exceeding capacity of a traffic facility such as a road flow into the traffic facility and speeds of movable apparatuses are lower than a predetermined first speed.

"Crowded" is a state in which a number of movable apparatuses corresponding to "congested" do not flow into the traffic facility, but speeds of movable apparatuses are low. More strictly, "crowded" is, for example, a state in which a large number of movable apparatuses flow into a traffic facility such as a road and speeds of the movable apparatuses are higher than a predetermined first speed and lower than a predetermined second speed higher than the predetermined first speed.

"Smooth" is, for example, a state in which movable apparatuses within the capacity of a traffic facility such as a road flow into the traffic facility and the movable apparatuses can move at a prescribed speed. The congestion level may be a level in consideration of a congestion status of pedestrians in addition to a congestion status of vehicles, two-wheel vehicles, and the like. The congestion level may be defined separately in a regular road and a highway.

The transmission interval determining unit 102 determines a time interval at which movable apparatus situation data is transmitted based on the moving speed of the movable apparatus 1 and the congestion status near the movable apparatus 1. For example, when the congestion level indicated by the movable apparatus situation data is "congested," the transmission interval determining unit 102 determines the time interval at which movable apparatus situation data is transmitted to be 1.0 [sec] as illustrated in Fig. 20.

For example, when the congestion level indicated by the movable apparatus situation data is "crowded," the transmission interval determining unit 102 determines the time interval at which movable apparatus situation data is transmitted to be 0.8 [sec] as illustrated in Fig. 20.

For example, when the congestion level indicated by the movable apparatus situation data is "smooth," the transmission interval determining unit 102 determines the time interval at which movable apparatus situation data is transmitted to be 0.1 [sec] as illustrated in Fig. 20.

When it is indicated by movement-relevant data that the congestion status near the movable apparatus 1 is lower than a predetermined level, the transmission interval determining unit 102 may determine the time interval at which movable apparatus situation data is transmitted based on the congestion status near the movable apparatus 1.

On the other hand, when it is indicated by movement-relevant data that the congestion status near the movable apparatus 1 is higher than a predetermined level, the transmission interval determining unit 102 may determine the time interval at which movable apparatus situation data is transmitted based on the moving speed of the movable apparatus 1.

Alternatively, the movement-relevant data acquiring unit 101 may acquire movement-relevant data indicating a relative speed of the movable apparatus 1 with respect to another movable apparatus. When the relative speed of the movable apparatus 1 with respect to another movable apparatus is equal to or higher than a predetermined relative speed, the transmission interval determining unit 102 performs the following process.

That is, in this case, the transmission interval determining unit 102 switches the process flow from a process of determining the time interval at which movable apparatus situation data is transmitted based on the moving speed of the movable apparatus 1 to a process of determining the time interval at which movable apparatus situation data is transmitted based on the relative speed of the movable apparatus 1 with respect to another movable apparatus.

The communication device 10 according to the fourth embodiment has been described hitherto. The communication device 10 determines a time interval at which movable apparatus situation data is transmitted based on the movement-relevant data based on the moving speed of the movable apparatus 1 and the congestion status near the movable apparatus 1. Accordingly, the communication device 10 can determine the time interval at which movable apparatus situation data is transmitted based on the congestion status near the movable apparatus 1 and the speed of the movable apparatus 1 based on the status.

Since the communication device 10 does not decrease the time interval at which movable apparatus situation data of the movable apparatus 1 is transmitted if unnecessary, it is possible to curb an unnecessary increase of a traffic volume of the network associated with V2X communication.

When it is indicated by movement-relevant data that the congestion status near the movable apparatus 1 is lower than a predetermined level, the communication device 10 determines the time interval at which movable apparatus situation data is transmitted based on the congestion status near the movable apparatus 1.

Accordingly, when an area near the movable apparatus 1 is congested and the speed of the movable apparatus 1 is limited, the communication device 10 can determine the time interval at which movable apparatus situation data is transmitted in consideration of the congestion status near the movable apparatus 1 greatly affecting the speed of the movable apparatus 1.

On the other hand, when it is indicated by movement-relevant data that the congestion status near the movable apparatus 1 is higher than the predetermined level, the communication device 10 determines the time interval at which movable apparatus situation data is transmitted based on the moving speed of the movable apparatus 1.

Accordingly, when an area near the movable apparatus 1 is not congested and the speed of the movable apparatus 1 is not limited, the communication device 10 can determine the time interval at which movable apparatus situation data is transmitted in consideration of the speed of the movable apparatus 1.

When a relative speed of the movable apparatus 1 with respect to another movable apparatus is equal to or higher than a predetermined relative speed, the communication device 10 performs the following process. That is, in this case, the communication device 10 switches the process flow from a process of determining the time interval at which movable apparatus situation data is transmitted based on the relative sped of the movable apparatus 1 with respect to another movable apparatus to a process of determining the time interval at which movable apparatus situation data is transmitted based on the moving speed of the movable apparatus 1.

Accordingly, when the relative sped of the movable apparatus 1 with respect to another movable apparatus is high and the movable apparatus situation data of the movable apparatus 1 is transmitted in detail to another movable apparatus, infrastructure, and the like, the communication device 10 can realize the transmission of details of movable apparatus situation data.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the communication device or the like through a network or various storage media. Then, a computer (or a CPU, an MPU, or the like) of the communication device or the like may be configured to read and execute the program. In such a case, the program and the storage medium storing the program configure the present invention.

The present invention includes, for example, realizations using at least one processor or circuit configured to function as the embodiments explained above. A plurality of processors may be used to perform distributed processing.

This application claims the benefit of Japanese Patent Application No. 2023-022668, filed on February 16, 2023, which is hereby incorporated by reference herein in its entirety.

A communication device includes: a movement-relevant data acquiring unit configured to acquire movement-relevant data indicating information relevant to movement of a movable apparatus; a transmission interval determining unit configured to determine a time interval in which movable apparatus situation data indicating a situation of the movable apparatus is transmitted based on the movement-relevant data; and a movable apparatus situation data transmitting unit configured to transmit the movable apparatus situation data at the time interval determined by the transmission interval determining unit.

**Claims**

1. A communication device comprising at least one processor or circuit configured to function as:

   a movement-relevant data acquiring unit configured to acquire movement-relevant data indicating information relevant to movement of a movable apparatus;
   a transmission interval determining unit configured to determine a time interval in which movable apparatus situation data indicating a situation of the movable apparatus is transmitted based on the movement-relevant data; and
   a movable apparatus situation data transmitting unit configured to transmit the movable apparatus situation data at the time interval determined by the transmission interval determining unit.

2. The communication device according to claim 1, wherein the movement-relevant data acquiring unit acquires the movement-relevant data when information relevant to movement of the movable apparatus changes, and
   wherein the transmission interval determining unit determines the time interval at which the movable apparatus situation data is transmitted when the information relevant to movement of the movable apparatus changes.

3. The communication device according to claim 1 or 2, wherein the movement-relevant data acquiring unit acquires the movement-relevant data indicating a moving speed of the movable apparatus.

4. The communication device according to any one of claims 1 to 3, wherein the movable apparatus situation data transmitting unit transmits the movable apparatus situation data indicating at least one of a position of the movable apparatus and a moving direction of the movable apparatus.

5. The communication device according to claim 3 or 4, wherein the transmission interval determining unit determines the time interval at which the movable apparatus situation data is transmitted based on a reciprocal of the moving speed of the movable apparatus.

6. The communication device according to any one of claims 3 to 5, wherein the transmission interval determining unit determines the time interval at which the movable apparatus situation data is transmitted based on a time-to-collision which is a time until the movable apparatus collides with an object present in the moving direction of the movable apparatus.

7. The communication device according to any one of claims 3 to 6, wherein the transmission interval determining unit determines the time interval at which the movable apparatus situation data is transmitted based on the moving speed of the movable apparatus and a stopping distance which is calculated using a friction coefficient between tires of the movable apparatus and a road surface on which the movable apparatus is moving.

8. The communication device according to claim 7, wherein the movement-relevant data acquiring unit acquires the movement-relevant data indicating at least one of an image generated by camera or a LiDAR mounted in the movable apparatus, an operation situation of a wiper mounted in the movable apparatus, and the weather near the movable apparatus, and
   wherein the transmission interval determining unit estimates a road surface state using the movement-relevant data and determines the time interval at which the movable apparatus situation data is transmitted based on the estimated road surface state.

9. The communication device according to any one of claims 3 to 8, wherein the movement-relevant data acquiring unit acquires the movement-relevant data indicating a congestion status near the movable apparatus, and
   wherein the transmission interval determining unit determines the time interval at which the movable apparatus situation data is transmitted based on the moving speed of the movable apparatus and the congestion status near the movable apparatus.

10. The communication device according to claim 9, wherein the transmission interval determining unit determines the time interval at which the movable apparatus situation data is transmitted based on the congestion status near the movable apparatus when it is determined based on the movement-relevant data that the congestion status near the movable apparatus is lower than a predetermined level.

11. The communication device according to claim 9 or 10, wherein the transmission interval determining unit determines the time interval at which the movable apparatus situation data is transmitted based on the moving speed of the movable apparatus when it is determined based on the movement-relevant data that the congestion status near the movable apparatus is higher than a predetermined level.

12. The communication device according to any one of claims 9 to 11, wherein the movement-relevant data acquiring unit acquires the movement-relevant data indicating the congestion status near the movable apparatus from a vehicle information and communication system.

13. The communication device according to any one of claims 9 to 12, wherein the movement-relevant data acquiring unit acquires the movement-relevant data indicating a relative speed of the movable apparatus with respect to another movable apparatus, and
wherein the transmission interval determining unit determines the time interval at which the movable apparatus situation data is transmitted based on the moving speed of the movable apparatus when the relative speed is equal to or higher than a predetermined relative speed.

14. A storage medium storing a communication program, the communication program comprising:

acquiring movement-relevant data indicating information relevant to movement of a movable apparatus;
determining a time interval in which movable apparatus situation data indicating a situation of the movable apparatus is transmitted based on the movement-relevant data; and
transmitting the movable apparatus situation data at the determined time interval.

15. A communication method comprising:

acquiring movement-relevant data indicating information relevant to movement of a movable apparatus;
determining a time interval in which movable apparatus situation data indicating a situation of the movable apparatus is transmitted based on the movement-relevant data; and
transmitting the movable apparatus situation data at the determined time interval.

FIG. 1

FIG. 2

FIG. 3A

t1 t2 t3 t4 t5 t6 t7 t8 t9 t10

TIME

FIG. 3B

s1 s2

TIME

FIG. 4

FIG. 5

| Speed of movable apparatus [km/h] | Time interval at which movable apparatus situation data is transmitted [sec] |
|:---:|:---:|
| ～10 | 1.0 |
| 20 | 0.5 |
| 30 | 0.3 |
| 40 | 0.3 |
| 50 | 0.2 |
| 60 | 0.2 |
| 70～ | 0.1 |

FIG. 6

FIG. 7

```
        ┌─────────────┐
        │    START    │
        └──────┬──────┘
               │
               ▼
┌──────────────────────────────┐
│ ACQUIRE MOVEMENT-RELEVANT DATA │──S11
└──────────────┬───────────────┘
               │
               ▼
┌──────────────────────────────┐
│ DETERMINE TIME INTERVAL AT WHICH│
│ MOVABLE APPARATUS SITUATION DATA IS│──S12
│ TRANSMITTED BASED ON MOVEMENT- │
│ RELEVANT DATA ACQUIRED IN STEP S11│
└──────────────┬───────────────┘
               │
               ▼
┌──────────────────────────────┐
│ STORE TRANSMISSION INTERVAL DATA│
│ INDICATING TIME INTERVAL AT WHICH│──S13
│ MOVABLE APPARATUS SITUATION DATA IS│
│       TRANSMITTED             │
└──────────────┬───────────────┘
               │
               ▼
        ┌─────────────┐
        │     END     │
        └─────────────┘
```

# FIG. 8

```
                    ┌─────────────┐
                    │    START    │
                    └──────┬──────┘
                           │
                           ▼
            ┌───────────────────────────────┐
            │       INITIALIZE TIMER         │──── S21
            └───────────────┬───────────────┘
                            │
                            ▼
            ┌───────────────────────────────┐
            │ PERFORM PROCESS OF COUNTING TIME│──── S22
            └───────────────┬───────────────┘
                            │
                            ▼
                       ╱─────────╲              S23
                      ╱  HAS TIME  ╲
                     ╱  INTERVAL    ╲   NO
                    ╱ DETERMINED IN  ╲──────►
                    ╲ STEP S22 OF FIG.7╱
                     ╲   ELAPSED?    ╱
                      ╲             ╱
                       ╲───────────╱
                            │ YES
                            ▼
            ┌───────────────────────────────┐
            │   TRANSMIT MOVABLE APPARATUS    │──── S24
            │        SITUATION DATA           │
            └───────────────┬───────────────┘
                            │
                            ▼
                       ╱─────────╲              S25
                      ╱    HAS     ╲
                     ╱ INSTRUCTION  ╲
                    ╱ FOR ENDING     ╲   NO
                   ╱ PROCESS OF       ╲──────►
                   ╲ TRANSMITTING      ╱
                    ╲ MOVABLE APPARATUS╱
                     ╲ SITUATION DATA  ╱
                      ╲  RECEIVED?    ╱
                       ╲─────────────╱
                            │ YES
                            ▼
                    ┌─────────────┐
                    │     END     │
                    └─────────────┘
```

FIG. 9

| Speed of movable apparatus [km/h] | Time-to-collision [sec] | Time interval at which movable apparatus situation data is transmitted [sec] |
|---|---|---|
| ～10 | 9.0 | 0.9 |
| 20 | 4.5 | 0.5 |
| 30 | 3.0 | 0.3 |
| 40 | 2.3 | 0.2 |
| 50 | 1.8 | 0.2 |
| 60 | 1.5 | 0.2 |
| 70～ | 1.3 | 0.1 |

FIG. 10

FIG. 11

| Reaction time | 1.00 |
|---|---|
| Friction coefficient | 0.75 |

## FIG. 12

| Speed of movable apparatus [km/h] | Speed of movable apparatus [m/sec] | Brake reaction distance [m] | Braking distance [m] | Sum of brake reaction distance [m] and stopping distance [m] | Safe distance [m] | Stopping distance [m] | Time interval at which movable apparatus situation data is transmitted [sec] | Time interval at which movable apparatus situation data is transmitted [sec] |
|---|---|---|---|---|---|---|---|---|
| ~10 | 2.8 | 2.8 | 0.5 | 3.3 | 5.0 | 8.3 | 1.2 | 1.0 |
| 20 | 5.6 | 5.6 | 2.1 | 7.7 | 5.0 | 12.7 | 0.8 | 0.8 |
| 30 | 8.3 | 8.3 | 4.7 | 13.1 | 5.0 | 18.1 | 0.6 | 0.6 |
| 40 | 11.1 | 11.1 | 8.4 | 19.5 | 5.0 | 24.5 | 0.4 | 0.4 |
| 50 | 13.9 | 13.9 | 13.1 | 27.0 | 5.0 | 32.0 | 0.3 | 0.3 |
| 60 | 16.7 | 16.7 | 18.9 | 35.6 | 5.0 | 40.6 | 0.2 | 0.2 |
| 70~ | 19.4 | 19.4 | 25.7 | 45.2 | 5.0 | 50.2 | 0.2 | 0.2 |

FIG. 13

FIG. 14

| Reaction time | 1.00 |
|---|---|
| Friction coefficient | 0.50 |

## FIG. 15

| Speed of movable apparatus [km/h] | Speed of movable apparatus [m/sec] | Brake reaction distance [m] | Braking distance [m] | Sum of brake reaction distance [m] and stopping distance [m] | Safe distance [m] | Stopping distance [m] | Time interval at which movable apparatus situation data is transmitted [sec] | Time interval at which movable apparatus situation data is transmitted [sec] |
|---|---|---|---|---|---|---|---|---|
| ~10 | 2.8 | 2.8 | 0.8 | 3.6 | 5.0 | 8.6 | 1.2 | 1.0 |
| 20 | 5.6 | 5.6 | 3.1 | 8.7 | 5.0 | 13.7 | 0.7 | 0.7 |
| 30 | 8.3 | 8.3 | 7.1 | 15.4 | 5.0 | 20.4 | 0.5 | 0.5 |
| 40 | 11.1 | 11.1 | 12.6 | 23.7 | 5.0 | 28.7 | 0.3 | 0.3 |
| 50 | 13.9 | 13.9 | 19.7 | 33.6 | 5.0 | 38.6 | 0.3 | 0.3 |
| 60 | 16.7 | 16.7 | 28.3 | 45.0 | 5.0 | 50.0 | 0.2 | 0.2 |
| 70~ | 19.4 | 19.4 | 38.6 | 58.0 | 5.0 | 63.0 | 0.2 | 0.2 |

EP 4 418 701 A1

FIG. 16

SPEED OF MOVABLE APPARATUS [km/h]

FIG. 17

| Reaction time | 1.00 |
|---|---|
| Friction coefficient | 0.15 |

FIG. 18

| Speed of movable apparatus [km/h] | Speed of movable apparatus [m/sec] | Brake reaction distance [m] | Braking distance [m] | Sum of brake reaction distance [m] and stopping distance [m] | Safe distance [m] | Stopping distance [m] | Time interval at which movable apparatus situation data is transmitted [sec] | Time interval at which movable apparatus situation data is transmitted [sec] |
|---|---|---|---|---|---|---|---|---|
| ～10 | 2.8 | 2.8 | 2.6 | 5.4 | 5.0 | 10.4 | 1.0 | 1.0 |
| 20 | 5.6 | 5.6 | 10.5 | 16.1 | 5.0 | 21.1 | 0.5 | 0.5 |
| 30 | 8.3 | 8.3 | 23.6 | 32.0 | 5.0 | 37.0 | 0.3 | 0.3 |
| 40 | 11.1 | 11.1 | 42.0 | 53.1 | 5.0 | 58.1 | 0.2 | 0.2 |
| 50 | 13.9 | 13.9 | 65.6 | 79.5 | 5.0 | 84.5 | 0.1 | 0.1 |
| 60 | 16.7 | 16.7 | 94.5 | 111.1 | 5.0 | 116.1 | 0.1 | 0.1 |
| 70～ | 19.4 | 19.4 | 128.6 | 148.0 | 5.0 | 153.0 | 0.1 | 0.1 |

EP 4 418 701 A1

FIG. 19

FIG. 20

| Congestion level | Time interval at which movable apparatus situation data is transmitted[sec] |
|---|---|
| Congested | 1.0 |
| Crowded | 0.8 |
| Smooth | 0.1 |

Europäisches
Patentamt
European
Patent Office
Office européen
des brevets

# EUROPEAN SEARCH REPORT

**Application Number**

EP 24 15 7008

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/037577 A1 (NAGURA MICHINAGA [JP]) 14 February 2008 (2008-02-14) * paragraphs [0005], [0063] - [0065], [0128] - [0134] * ----- | 1-5,9-15 | INV. H04W4/40 |
| X | US 2018/246185 A1 (HIRAYAMA YASUHIRO [JP] ET AL) 30 August 2018 (2018-08-30) * paragraphs [0040] - [0043], [0050] - [0053], [0059], [0071], [0148] * ----- | 1-6,14, 15 | |
| X | US 2019/116609 A1 (FENG SUJUAN [DE] ET AL) 18 April 2019 (2019-04-18) * paragraphs [0203], [0219] * ----- | 1-5,14, 15 | |
| A | | 13 | |
| X | KR 2016 0048020 A (IUCF HYU [KR]) 3 May 2016 (2016-05-03) * paragraphs [0003], [0006], [0007], [0039] - [0044] * ----- | 1-5,7,9, 14,15 | |
| Y | | 8 | |
| A | US 2015/296411 A1 (MEYER MICHAEL [DE] ET AL) 15 October 2015 (2015-10-15) * paragraphs [0033] - [0038] * ----- | 9-12 | TECHNICAL FIELDS SEARCHED (IPC) |
| Y | US 2016/133130 A1 (GRIMM DONALD K [US] ET AL) 12 May 2016 (2016-05-12) * paragraph [0061] * ----- | 8 | H04W G08G |
| Y | KR 2022 0138483 A (JEONBUK INSTITUTE OF AUTOMOTIVE TECH [KR]) 13 October 2022 (2022-10-13) * paragraph [0049] * ----- | 8 | |

The present search report has been drawn up for all claims

| Place of search | Date of completion of the search | Examiner |
|---|---|---|
| The Hague | 4 April 2024 | Blanco Cardona, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 7008

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2024

| Patent document cited in search report | | Publication date | Patent family member(s) | | Publication date |
|---|---|---|---|---|---|
| US 2008037577 | A1 | 14-02-2008 | DE 102007037640 | A1 | 08-05-2008 |
| | | | JP 4770635 | B2 | 14-09-2011 |
| | | | JP 2008042738 | A | 21-02-2008 |
| | | | US 2008037577 | A1 | 14-02-2008 |
| | | | US 2011019577 | A1 | 27-01-2011 |
| US 2018246185 | A1 | 30-08-2018 | NONE | | |
| US 2019116609 | A1 | 18-04-2019 | BR 112018068672 | A2 | 05-02-2019 |
| | | | CN 108781441 | A | 09-11-2018 |
| | | | CN 116347614 | A | 27-06-2023 |
| | | | EP 3437402 | A1 | 06-02-2019 |
| | | | EP 3823393 | A1 | 19-05-2021 |
| | | | EP 4236569 | A2 | 30-08-2023 |
| | | | JP 6757800 | B2 | 23-09-2020 |
| | | | JP 2019516282 | A | 13-06-2019 |
| | | | KR 20180131558 | A | 10-12-2018 |
| | | | RU 2701117 | C1 | 24-09-2019 |
| | | | SG 11201808239Q | A | 30-10-2018 |
| | | | US 2019116609 | A1 | 18-04-2019 |
| | | | US 2021176774 | A1 | 10-06-2021 |
| | | | US 2023156691 | A1 | 18-05-2023 |
| | | | WO 2017166260 | A1 | 05-10-2017 |
| KR 20160048020 | A | 03-05-2016 | NONE | | |
| US 2015296411 | A1 | 15-10-2015 | EP 2901724 | A1 | 05-08-2015 |
| | | | US 2015296411 | A1 | 15-10-2015 |
| | | | WO 2014048486 | A1 | 03-04-2014 |
| US 2016133130 | A1 | 12-05-2016 | NONE | | |
| KR 20220138483 | A | 13-10-2022 | NONE | | |

EPO FORM P0459

For more details about this annex : see Official Journal of the European Patent Office, No. 12/82

**REFERENCES CITED IN THE DESCRIPTION**

**Patent documents cited in the description**

- JP 2006221286 A

- JP 2023022668 A